# EUROPEAN PATENT APPLICATION

(11) **EP 4 851 819 A1**
(43) Date of publication of application: **09.12.2026**
(21) Application number: 25866332.7
(22) Date of filing: 17.07.2025
(51) Int. Cl.: G06F 16/22, G06F 16/21, G06F 16/2458, G06F 16/11, G06F 9/54

(54) **DATA PROCESSING METHOD OF DATA PROCESSING SYSTEM**

(30) Priority: 11.09.2024 KR 20240124023
(71) Applicant: LG Energy Solution, Ltd., Seoul 07335 (KR)
(72) Inventor: KIM, Seoyeon, Daejeon 34122 (KR); JO, Jeongjae, Daejeon 34122 (KR)
(74) Representative: Goddar, Heinz J.
(86) International application number: PCT/KR2025/010559
(87) International publication number: WO 2026/059077

(57) **Abstract**

According to an embodiment disclosed in the present document, a data processing method comprises the steps of: generating one or more analyzed results by analyzing battery data by means of a first analysis engine among a plurality of analysis engines driven independently of each other, and generating a first compressed file by compressing the one or more analyzed results; storing the first compressed file in a data lake; extracting the first compressed file stored in the data lake and transmitting the extracted first compressed file to an analysis device; acquiring the one or more analyzed results by decompressing the first compressed file by means of the analysis device; generating a plurality of data frames by processing the one or more analyzed results; and storing the plurality of data frames in a database.

## Description

### Technical Field

This application claims the benefit of Korean Patent Application No. 10-2024-0124023, filed on September 11, 2024, in the Korean Intellectual Property Office, the disclosure of which is incorporated herein by reference in its entirety.

The present disclosure relates to a data processing method of a data processing system.

### Background Art

Recently, research and development on secondary batteries have been actively conducted. Here, secondary batteries refer to rechargeable batteries, encompassing conventional Ni/Cd batteries, Ni/MH batteries, and recent lithium-ion batteries. Among secondary batteries, lithium-ion batteries have the advantage of having a much higher energy density than conventional Ni/Cd batteries, Ni/MH batteries, and the like. In addition, lithium-ion batteries can be manufactured to be small and lightweight, so they are used as a power source for mobile devices. Recently, their application scope has expanded to include power sources for electric vehicles, drawing attention as a next-generation energy storage medium.

As batteries are used as the power source for electric vehicles, the management and analysis of battery data installed in electric vehicles are becoming increasingly important. In particular, with technological advancements, types of battery data are becoming increasingly sophisticated and diverse. Therefore, there is a need to efficiently process data for analyzing and managing battery data.

### Detailed Description of the Invention

### Technical Goals

An aspect of example embodiments disclosed in this document is to provide a data processing method of a data processing system that may efficiently perform processing of battery data.

Further, an aspect of example embodiments disclosed in this document is to provide a data processing method of a data processing system that may reduce data storage use and processing load and reduce database access load during the process of processing battery data.

The technical goals to be achieved by example embodiments of the present disclosure are not limited to the goals described above and other technical goals may be clearly understood by those skilled in the art from the following example embodiments.

### Technical solutions

According to an example embodiment disclosed in this document, a data processing method may include generating a first compressed file by generating one or more analysis results through an analysis of battery data by a first analysis engine among a plurality of analysis engines driven independently of one another and compressing the one or more analysis results, storing the first compressed file in a data lake, transmitting the first compressed file to an analysis device by extracting the first compressed file stored in the data lake, acquiring the one or more analysis results by decompressing the first compressed file by the analysis device, generating a plurality of data frames by processing the one or more analysis results, and storing the plurality of data frames in a database.

According to an example embodiment, the plurality of analysis engines may be configured based on a microservices architecture (MSA) structure.

According to an example embodiment, the plurality of analysis engines may include different analysis algorithms, and the generating of the first compressed file may include generating the one or more analysis results corresponding to an analysis algorithm of the first analysis engine.

According to an example embodiment, the transmitting to the analysis device may include sequentially transmitting the first compressed file stored in the data lake to the analysis device by a message queue.

According to an example embodiment, the generating of the plurality of data frames may include transforming data included in the one or more analysis results to correspond to a plurality of schema structures and generating the plurality of data frames by grouping data corresponding to each of the plurality of schema structures.

According to an example embodiment, each of the plurality of schema structures may correspond to a storage structure of each of a plurality of tables included in the database.

According to an example embodiment, the storing in the database may include loading each of the plurality of data frames into a table having a corresponding storage structure.

According to an example embodiment, the storing in the database may include borrowing a connection object having a connection established with respect to the database from a connection pool in which the connection object is stored, and loading each of the plurality of data frames into the database using the connection object.

According to an example embodiment, the storing in the database may further include returning the connection object to the connection pool.

### Effects of the Invention

According to example embodiments disclosed in this document, a data processing method of a data processing system may reduce a storage capacity required for data processing, reduce data processing load, and increase the efficiency of data processing by compressing and processing analysis results generated from analysis engines.

In addition, various effects may be provided, either directly or indirectly, through this document.

### Brief Description of Drawings

FIG. 1 is a flowchart illustrating a data processing process according to an example embodiment disclosed in this document.
FIG. 2 is a diagram illustrating a structure of a data processing system according to an example embodiment disclosed in this document.
FIG. 3 is a diagram illustrating an overall structure of a data processing system according to an example embodiment disclosed in this document.
FIG. 4 is a flowchart illustrating a data processing method according to an example embodiment disclosed in this document.

### Mode for Carrying Out the Invention

Hereinafter, example embodiments of the present disclosure will be described with reference to the drawings. However, this is not intended to limit the present disclosure to a particular embodiment, but should be understood to include various modifications, equivalents, and/or alternatives of the example embodiments of the present disclosure.

A singular form of a noun corresponding to an item may include one or a plurality of the item, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and do not limit the components in other aspects (e.g., importance or order). If an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wired), wirelessly, or via a third element.

Each component (e.g., a module or program) of the above-described components may include a single entity or multiple entities. According to various example embodiments, one or more of the above-described components may be omitted, or one or more other components may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to various example embodiments, operations performed by the module, the program, or another component may be carried out sequentially, in parallel, repetitively, or heuristically, or one or more of the operations may be executed in a different order or omitted, or one or more other operations may be added.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various example embodiments as set forth herein may be implemented as software (e.g., program or application) including one or more instructions that are stored in a storage medium (e.g., memory) that is to be read by a machine. For example, a processor of the machine may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

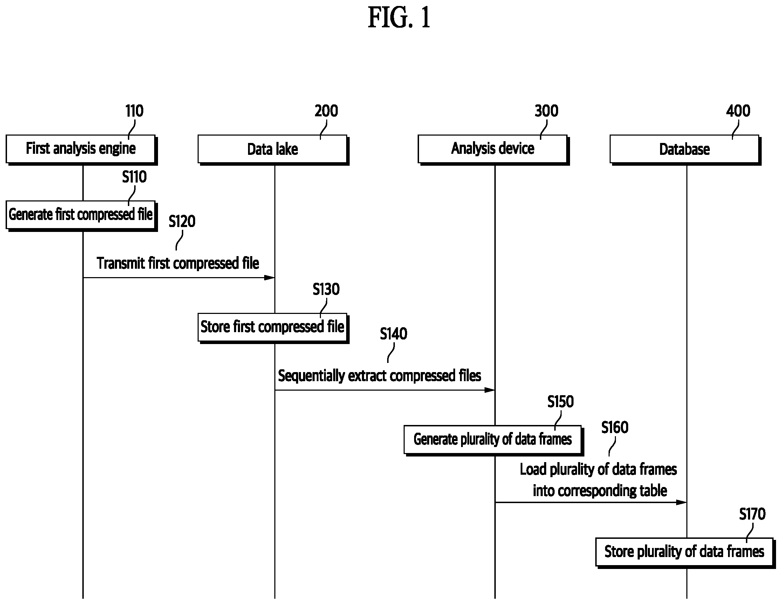

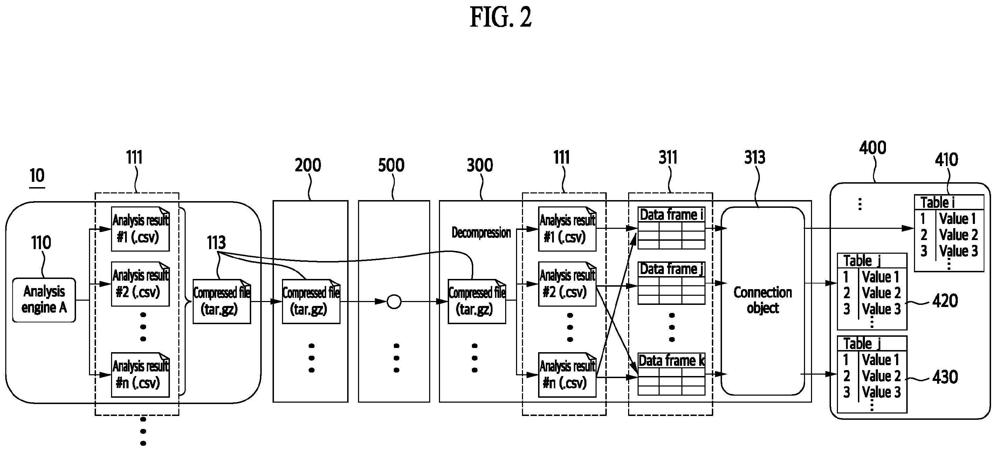

FIG. 1 is a flowchart illustrating a data processing process according to an example embodiment disclosed in this document. FIG. 2 is a diagram illustrating a structure of a data processing system according to an example embodiment disclosed in this document.

Referring to FIG. 1 and FIG. 2, a data processing system 10 may perform a series of processes including processing an analysis result generated by analyzing battery data and storing processed data in a database. For example, the data processing system 10 may store, in the database, data processed by performing a data processing process of extracting, transforming, and loading on the analysis result generated by analyzing the battery data.

The data processing system 10 may process analysis results generated by analyzing battery data. As the importance of battery data analysis increases, types and amount of battery data used for analysis are increasing. As the amount of battery data increases, the analysis result data of the data processing system 10 increases, which may rapidly increase a storage capacity required to store the data, data processing load, and database access load.

Accordingly, the data processing system 10 may reduce the required storage capacity and data processing load and increase the efficiency of data processing by compressing and processing the analysis results of battery data. In addition, the data processing system 10 may reduce the database access load by utilizing a connection object from a connection pool when loading the processed data into the database.

Hereinafter, a data processing method of the data processing system 10 will be described with reference to FIG. 1 and FIG. 2. The data processing method of the data processing system 10 may include a series of processes for analyzing battery data, extracting, transforming, and loading analysis results.

First, referring to FIG. 1, in operation S110, the data processing system 10 may generate a first compressed file. Specifically, the data processing system 10 may generate the first compressed file by a first analysis engine 110.

The first analysis engine 110 may be one of a plurality of analysis engines driven independently of one another. The plurality of analysis engines may include analysis engines driven independently of one another, and one of the plurality of analysis engines may be referred to as a first analysis engine.

According to an example embodiment, the plurality of analysis engines may be configured based on a microservices architecture (MSA) structure. The plurality of analysis engines may have an MSA structure to operate independently of one another and have a minimized mutual dependency. The MSA structure is an architecture that enables changes and combinations of applications by dividing a single large application into multiple smaller applications, and each analysis engine may be run as a single application.

Each of the plurality of analysis engines may generate an analysis result by analyzing battery data. For this, each of the plurality of analysis engines may include an analysis algorithm for generating the analysis result, and according to an example embodiment, the plurality of analysis engines may include different analysis algorithms, respectively.

The analysis algorithm may include various types of algorithms, such as a remaining useful lifecycle (RUL) algorithm that analyzes an RUL of a battery, a state of health (SOH) algorithm that analyzes an SOH of a battery, a statistical algorithm that performs statistical analysis on battery data, and a failure prediction algorithm that predicts battery failure. However, this is merely an example, and the analysis algorithm is not limited to the aforementioned types of algorithms.

For example, the SOH algorithm may use battery data such as a battery voltage, a battery current, and a battery SOC, and may produce battery SOH data as an analysis result.

The analysis engines may have different types of battery data used for analysis, different types of analysis result data, and different analysis cycles based on the analysis algorithms included therein. In addition, the data processing system 10 may construct the analysis engine by selectively combining analysis engines according to a purpose of battery data analysis. For example, depending on whether the battery data analysis is real-time or batch analysis, different analysis algorithms and analysis engines may be combined.

The analysis engines may have different analysis characteristics and produce different analysis results. For example, the first analysis engine may derive an analysis result related to a performance of a battery, and a second analysis engine may derive an analysis result related to a use of the battery. In one example, the first analysis engine may derive an analysis result related to battery performance, such as battery SOH and RUL, and the second analysis engine may derive an analysis result related to a battery use, such as battery charging guide and optimal power consumption guide.

The first analysis engine 110 may generate one or more analysis results by analyzing the battery data. The battery data may be collected from various components such as a battery management system of the battery and an OBD device in a vehicle. The battery data may include various types of data, such as battery charge state, temperature, current, and voltage.

For example, the first analysis engine 110 may receive the battery data from an external device (for example, a cloud server) and analyze the received battery data to generate one or more analysis results. The analysis result may include one or more analysis data, and depending on a type of analysis engine and/or analysis algorithm, analysis data having at least a different portion may be derived.

For example, the first analysis engine 110 may generate one or more analysis results corresponding to an analysis algorithm included in the first analysis engine 110. For example, when the analysis algorithm of the first analysis engine 110 is the RUL algorithm, the first analysis engine 110 may generate an analysis result including battery RUL data.

The first analysis engine 110 may generate the first compressed file by compressing the one or more analysis results. The first compressed file may include one or more analysis results used for compression. For example, analysis data derived from the first analysis engine 110 may have a .CSV extension, and the first analysis engine 110 may compress one or more analysis results to create the first compressed file with a tar.gz extension.

The first compressed file may be at least one compressed file, and may also be provided in plural based on a characteristic of the analysis result, a capacity of the analysis results, and the like.

In operation S120, the first analysis engine 110 may transmit the first compressed file to a data lake 200. The plurality of analysis engines and the data lake 200 may be connected so that a plurality of compressed files is transmitted from the plurality of analysis engines to the data lake 200 through various communication methods.

In operation S130, the first compressed file may be stored in the data lake 200. Like the first compressed file of the first analysis engine 110, the data processing system 10 may store each compressed file generated from each of the plurality of analysis engines in the data lake 200.

The data lake 200 may store raw data in its unprocessed form before the data is processed. For example, the data lake 200 may store raw data of a first compressed file 113. The data lake 200 may serve to store raw data of compressed files for a relatively long period.

In operation S140, the compressed files stored in the data lake 200 may be extracted in sequence. The data processing system 10 may extract the first compressed file 113 stored in the data lake 200 and transmit the compressed file 113 to an analysis device 300. For example, the data processing system 10 may sequentially transmit the compressed files stored in the data lake 200 to the analysis device 300.

According to an example embodiment, the first compressed file stored in the data lake 200 may be transmitted to the analysis device 300 by a message queue 500 in sequence.

The message queue 500 may be a type of communication method used when exchanging data between components, and may mediate data transmission between different components by using a queue that may act as a buffer during the data transmission process. The message queue 500 may mediate data transmission between the data lake 200 and the analysis device 300.

The message queue 500 may sequentially transmit data stored in the data lake 200, for example, the compressed files, to the analysis device 300. The compressed files stored in the data lake 200 may be transferred to the message queue 500 and temporarily stored, and the analysis device 300 may sequentially poll and acquire the compressed files stored in the message queue 500. As such, the compressed files may be sequentially transmitted by the message queue 500 from the data lake 200 to the analysis device 300.

In operation S150, the analysis device 300 may generate a plurality of data frames.

First, the analysis device 300 may decompress the first compressed file extracted from the data lake 200 to acquire one or more analysis results included in the first compressed file. The analysis device 300 may decompress the first compressed file transferred from the message queue 500 to acquire one or more analysis results included in the first compressed file. To transform analysis data included in the analysis result, the analysis device 300 may decompress the compressed file and acquire the analysis result included in the compressed file.

The analysis device 300 may generate the plurality of data frames by processing the one or more analysis results. The analysis device 300 may process the one or more analysis results to transform data and reflect the data to a database 400. For example, the analysis device 300 may generate a mapping between analysis result data and the database 400 to load the analysis result data into the database 400 corresponding to a target for storage.

According to an example embodiment, the analysis device 300 may transform the data included in the one or more analysis results to correspond to a plurality of schema structures. A schema may be a concept that defines a data structure of data. For example, the analysis result data may each have a data structure, that is, a schema. The analysis device 300 may transform analysis result data having different schemas to correspond to the plurality of schema structures. For example, the analysis device 300 may transform the analysis result data included in the analysis result to correspond to the plurality of schema structures by extracting or merging a portion of data items of the analysis result data.

The plurality of schema structures may be set in advance. According to an example embodiment, the plurality of schema structures may correspond to storage structures of a plurality of tables included in the database 400, respectively. Here, each of the storage structures of the plurality of tables may indicate a schema structure of data stored in each table.

For example, for each of the storage structures, a plurality of columns related to a type of data may be defined. The type of data in each column may include various types such as data collection time, data collection vehicle identification (ID), ID of an analysis engine generating an analysis result, battery voltage, battery current, battery SOC, and battery temperature.

To transform and load the analysis result data into the database 400, the analysis device 300 may transform the analysis result data to have the plurality of schema structures corresponding to the storage structure of each of the plurality of tables. This can be understood as generating a mapping between the analysis result data and the database 400.

According to an example embodiment, the analysis device 300 may generate the plurality of data frames by grouping data corresponding to the plurality of schema structures. The analysis device 300 may generate a data frame by grouping and listing data with an identical schema structure. For example, the data frame may be a structure in which data having an identical schema structure is listed in parallel.

In operation S160, each of the plurality of data frames may be loaded into a corresponding table. The plurality of data frames generated by the analysis device 300 may be loaded into the database 400. The database 400 may include the plurality of tables, and each of the plurality of data frames may be loaded into a corresponding table. For example, each data frame may be loaded into a table having a storage structure corresponding to a schema structure of the data frame. That is, a mapping between the schema structure of the data frame and the table of the database 400 may be generated by the analysis device 300, and each data frame may be loaded into a corresponding table.

According to an example embodiment, the analysis device 300 may borrow a connection object from a connection pool. Here, the connection pool may indicate a library in which a connection object having a connection established with respect to the database 400. For example, the analysis device 300 may borrow the connection object each that that a new data frame is generated.

The analysis device 300 may load each of the plurality of data frames into the database 400 using the connection object borrowed from the connection pool. As described above, the connection object may have a connection established with respect to the database 400 and load the data frame of the analysis device 300 into the database 400. The analysis device 300 may temporarily borrow the connection object and connect to the database 400, thereby reducing database access load in the data processing process.

When the plurality of data frames is completely loaded into the database 400, the analysis device 300 may return the borrowed connection object to the connection pool.

In operation S170, the database 400 may store the plurality of data frames. Each of the data frames may be stored in a table having a corresponding storage structure.

Referring to FIG. 2, the first analysis engine 110 may analyze battery data and generate one or more analysis results 111. In addition, the first analysis engine 110 may compress the one or more analysis results 111 to generate the first compressed file 113. As an example, the analysis result data included in the one or more analysis results 111 may be data having a first format (for example, .CSV), and the first analysis engine 110 may compress the data to generate the first compressed file having a second format (for example, tar.gz).

The first compressed file 113 generated by the first analysis engine 110 may be stored in the data lake 200. The data lake 200 may store raw data of the first compressed file 113 for a long period of time. In addition, the data lake 200 may store compression files generated from the plurality of analysis engines including the first analysis engine 110.

The compression files stored in the data lake 200 may be sequentially provided to the analysis device 300 by the message queue 500. The message queue 500 may have a first-in, first-out structure, so that data input earlier may be output earlier. The message queue 500 may temporarily store the input data and sequentially output the data input in the message queue 500. For example, the first compressed file stored in the data lake 200 may be input to the message queue 500 and sequentially provided to the analysis device 300 according to an order of input.

The analysis device 300 may generate a plurality of data frames 311 by processing the first compressed file 113 provided from the message queue 500. First, the analysis device 300 may decompress the first compressed file 113 to acquire the one or more analysis results 111 included in the first compressed file 113.

Thereafter, the analysis device 300 may process the one or more analysis results 111 to generate the plurality of data frames 311. For example, the analysis device 300 may transform each of the one or more analysis results 111 to have a determined schema structure and combine data having an identical schema structure, thereby generating the plurality of data frames 311.

The analysis device 300 may load the plurality of data frames 311 into the database 400. In an example embodiment, a connection object 313 may be borrowed from a connection pool in which a connection object having a connection established with respect to the database 400 is stored, and using the connection object 313, each of the plurality of data frames 311 may be loaded into the database 400.

The analysis device 300 may borrow the connection object 313 when the plurality of data frames 311 are created, perform transaction processing on each data frame, load the data frame into the database 400, and return the connection object 313 when the loading is completed. As such, the data processing system 10 may reduce the database 400 access load by attempting to connect to the database 400 only when loading and storing into the database 400 is required.

The database 400 may have a plurality of tables 410, 420, and 430, and each of the plurality of data frames may be loaded into a table having a corresponding storage structure. For example, the analysis device 300 may generate a mapping between the plurality of data frames and the table and load each of the data frames into the corresponding table based on the mapping.

For example, a data frame having a first schema structure may be stored in the first table 410, a data frame having a second schema structure may be stored in the second table 420, and a data frame having a third schema structure may be stored in the third table 430.

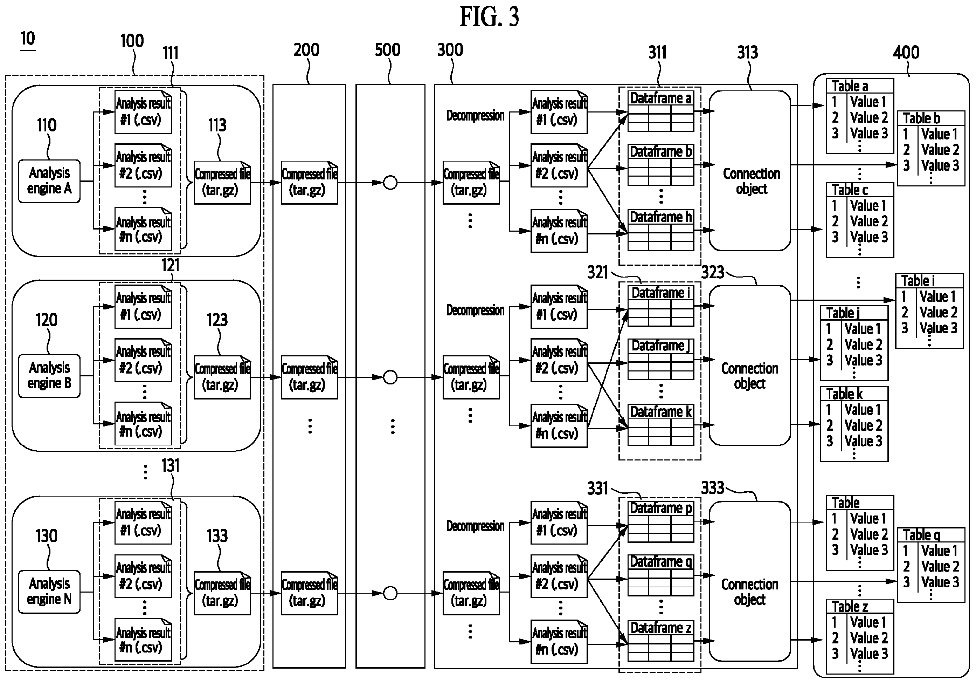

FIG. 3 is a diagram illustrating an overall structure of a data processing system according to an example embodiment disclosed in this document. Hereinafter, repeated content regarding the description of FIG. 1 and FIG. 2 will be omitted.

Referring to FIG. 3, the data processing system 10 may include a plurality of analysis engines 100. The plurality of analysis engines 100 may have an MSA structure, and analysis engines 110, 120, and 130 may be driven independently of one another.

The analysis engines 110, 120, and 130 included in the plurality of analysis engines 100 may analyze battery data to generate respective analysis results and compressed files. For example, the first analysis engine 110 may generate the first analysis result 111 and generate the first compressed file 113, the second analysis engine 120 may generate a second analysis result 121 and generate a second compressed file 123, and the third analysis engine 130 may generate a third analysis result 131 and generate a third compressed file 133.

The respective compressed files 113, 123, and 133 generated by the respective analysis engines110, 120, and 130 may be stored in the data lake 200 and sequentially provided to the analysis device 300 by the message queue 500.

The analysis device 300 may process the compressed files sequentially provided from the message queue 500 to generate a plurality of data frames. For example, the analysis device 300 may decompress the second compressed file 123 to acquire the second analysis result 121, and process the second analysis result 121 to generate a second data frame 321.

FIG. 3 illustrates processes of the analysis device 300 generating data frames from the compressed files 113, 123, and 133 as one drawing, but the processes may not be temporally a same and may be performed sequentially.

When a plurality of data frames corresponding to one compressed file is generated, the analysis device 300 may borrow a connection object from a connection pool to load the plurality of data frames into the database 400. For example, when a third data frame 331 corresponding to the third compressed file 133 is generated, the analysis device 300 may borrow a connection object 333 to load the third data frame 331 into the database 400. Likewise, when a first data frame 311 is generated, the analysis device 300 may borrow the connection object 313 to load the first data frame 311 into the database 400, and when the second data frame 321 is generated, the analysis device 300 may borrow a connection object 323 to load the second data frame 321 into the database 400.

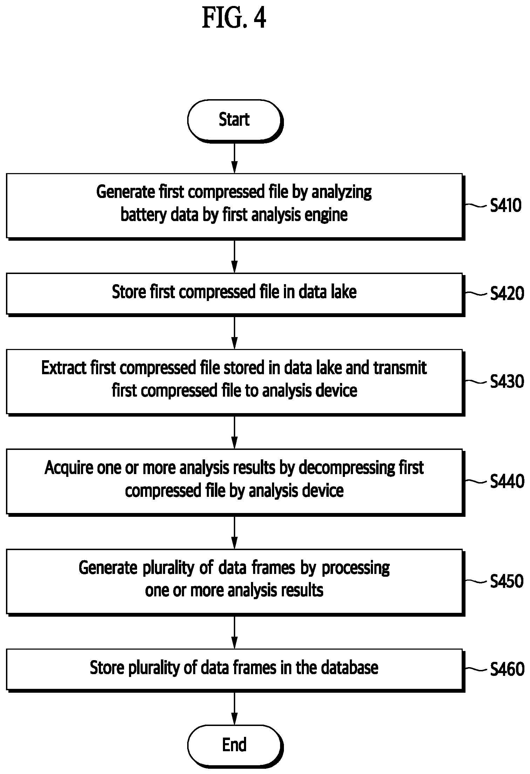

FIG. 4 is a flowchart illustrating a data processing method according to an example embodiment disclosed in this document.

Referring to FIG. 4, in operation S410, a first compressed file may be generated by analyzing battery data by the first analysis engine 110. The first analysis engine 110 may be one of the plurality of analysis engines, and each analysis engine may generate a compressed file from the battery data. The first analysis engine 110 may analyze the battery data to generate one or more analysis results, and compress the one or more analysis results to generate a first compressed file.

In operation S420, the first compressed file may be stored in the data lake 200. The data lake 200 may store compressed files generated by the plurality of analysis engines, including the first compressed file. The data lake 200 may store raw data of the compressed files.

In operation S430, the first compressed file stored in the data lake 200 may be extracted and transmitted to an analysis device. For example, the compressed files stored in the data lake 200 may be sequentially transmitted to the analysis device 300 by the message queue 500.

In operation S440, the one or more analysis results may be acquired by decompressing the first compressed file by the analysis device 300. The analysis device 300 may decompress a file compressed for processing data, thereby acquiring the one or more analysis results included in the first compressed file.

In operation S450, a plurality of data frames may be generated by processing the one or more analysis results by the analysis device 300. The analysis device 300 may convert the one or more analysis results to correspond to a plurality of schema structures and group data having an identical schema structure, thereby generating the plurality of data frames.

In operation S460, the plurality of data frames may be stored in the database 400. The analysis device 300 may load the generated plurality of data frames into the database 400. For example, the analysis device 300 may borrow a connection object from a connection pool to load the plurality of data frames into the database 400.

The present specification and drawings have been described with respect to the example embodiments of the present disclosure. Although specific terms are used, it is only used in a general sense to easily explain the technical content of the present disclosure and to help the understanding of the invention, and is not intended to limit the scope of the specification. It will be apparent to those skilled in the art that other modifications based on the technical spirit of the present disclosure may be implemented in addition to the example embodiments disclosed herein.

The electronic device or terminal in accordance with the above-described example embodiments may include a processor, a memory which stores and executes program data, a permanent storage such as a disk drive, a communication port for communication with an external device, and a user interface device such as a touch panel, a key, and a button. Methods realized by software modules or algorithms may be stored in a computer-readable recording medium as computer-readable codes or program commands which may be executed by the processor. Here, the computer-readable recording medium may be a magnetic storage medium (for example, a read-only memory (ROM), a random-access memory (RAM), a floppy disk, or a hard disk) or an optical reading medium (for example, a CD-ROM or a digital versatile disc (DVD)). The computer-readable recording medium may be dispersed to computer systems connected by a network so that computer-readable codes may be stored and executed in a dispersion manner. The medium may be read by a computer, may be stored in a memory, and may be executed by the processor.

The present example embodiments may be represented by functional blocks and various processing steps. These functional blocks may be implemented by various numbers of hardware and/or software configurations that execute specific functions. For example, the present example embodiments may adopt direct circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

## Claims

1. A data processing method performed by a data processing system, the data processing method comprising:
generating a first compressed file by generating one or more analysis results through an analysis of battery data by a first analysis engine among a plurality of analysis engines driven independently of one another and compressing the one or more analysis results;
storing the first compressed file in a data lake;
transmitting the first compressed file to an analysis device by extracting the first compressed file stored in the data lake;
acquiring the one or more analysis results by decompressing the first compressed file by the analysis device;
generating a plurality of data frames by processing the one or more analysis results; and
storing the plurality of data frames in a database.

2. The data processing method of claim 1, wherein the plurality of analysis engines is configured based on a microservices architecture (MSA) structure.

3. The data processing method of claim 1, wherein the plurality of analysis
engines includes different analysis algorithms, and
the generating of the first compressed file comprises generating the one or more analysis results corresponding to an analysis algorithm of the first analysis engine.

4. The data processing method of claim 1, wherein the transmitting to the analysis device comprises sequentially transmitting the first compressed file stored in the data lake to the analysis device by a message queue.

5. The data processing method of claim 1, wherein the generating of the plurality of data frames comprises:
transforming data included in the one or more analysis results to correspond to a plurality of schema structures; and
generating the plurality of data frames by grouping data corresponding to each of the plurality of schema structures.

6. The data processing method of claim 5, wherein each of the plurality of schema structures corresponds to a storage structure of each of a plurality of tables included in the database.

7. The data processing method of claim 6, wherein the storing in the database comprises loading each of the plurality of data frames into a table having a corresponding storage structure.

8. The data processing method of claim 1, wherein the storing in the database comprises:
borrowing a connection object having a connection established with respect to the database from a connection pool in which the connection object is stored; and
loading each of the plurality of data frames into the database using the connection object.

9. The data processing method of claim 8, wherein the storing in the database further comprises returning the connection object to the connection pool.

10. A non-transitory computer-readable recording medium comprising a program for performing the data processing method of claim 1 on a computer.
